# EUROPÄISCHE PATENTANMELDUNG

(11) **EP 4 234 140 A2**
(43) Veröffentlichungstag der Anmeldung: **30.08.2023**
(21) Anmeldenummer: 23185867.1
(22) Anmeldetag: 23.01.2013
(51) Int. Cl.: B23C 5/26

(54) **EINSCHRAUBWERKZEUG UND WERKZEUGAUFNAHME FÜR EIN DERARTIGES EINSCHRAUBWERKZEUG**

(30) Priorität: 07.02.2012 DE 102012100976
(62) Teilanmeldung aus: 13702395.8
(71) Anmelder: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau

(57) **Zusammenfassung**

Die Erfindung betrifft ein Einschraubwerkzeug (1) und eine Werkzeugaufnahme (2) für ein derartiges Einschraubwerkzeug. Das Einschraubwerkzeug (1) enthält einen Werkzeugkopf (3) und einen Werkzeugschaft (4) mit einem Außengewinde (5) und einem zwischen dem Werkzeugkopf (3) und dem Außengewinde (5) angeordneten Abstützbereich. Der Abstützbereich wird erfindungsgemäß durch zwei konische Anlageflächen (6, 8) mit unterschiedlichen Kegelwinkeln gebildet.

## Beschreibung

Die Erfindung betrifft ein Einschraubwerkzeug nach dem Oberbegriff des Anspruchs 1. Die Erfindung betrifft außerdem eine Werkzeugaufnahme für ein derartiges Einschraubwerkzeug und eine Werkzeuganordnung mit Einschraubwerkzeug und Werkzeugaufnahme.

Aus der WO 2006/033617 A1 ist ein Einschraubwerkzeug bekannt, das einen Werkzeugkopf und einen Werkzeugschaft mit einem Außengewinde und einem zwischen dem Werkzeugkopf und dem Außengewinde angeordneten ersten Abstützbereich enthält. Bei diesem bekannten Einschraubwerkzeug ist der erste Abstützbereich entweder als Radialbund mit einer Planfläche und einer zylindrischen inneren Anlagefläche oder als konische Anlagefläche ausgeführt. Bei der ersten Alternative wird über die Planfläche des Radialbund zwar eine genaue axiale Positionierung des Einsschraubwerkzeugs innerhalb einer Aufnahme erreicht, allerdings ist die Zentrierwirkung über die zylindrische Anlagefläche beschränkt. Über die konische Anlagefläche ist zwar eine bessere Zentrierwirkung erreichbar, jedoch können sich die Außenwände der Werkzeugaufnahmen infolge der Keilwirkung der konischen Anlagefläche nach außen verformen, was sich negativ auf die axiale Ausrichtung auswirken kann.

Aufgabe der Erfindung ist es, ein Einschraubwerkzeug, eine Werkzeugaufnahme für ein derartiges Einschraubwerkzeug und eine Werkzeuganordnung mit Werkzeugaufnahme und Einschraubwerkzeug zu schaffen, die eine positionsgenaue und reproduzierbare Aufnahme und Halterung eines Einschraubwerkzeugs ermöglichen.

Diese Aufgabe wird durch ein Einschraubwerkzeug mit den Merkmalen des Anspruchs 1, durch eine Werkzeugaufnahme mit den Merkmalen des Anspruchs 11 und durch eine Werkzeuganordnung mit den Merkmalen des Anspruchs 22 gelöst. Zweckmäßige Weiterbildungen und vorteilhafte Ausführungsformen der Erfindung sind Gegenstand der Unteransprüche.

Bei dem erfindungsgemäßen Einschraubwerkzeug wird der zwischen dem Werkzeugkopf und dem Außengewinde angeordnete Abstützbereich durch zwei konische Anlageflächen mit unterschiedlichen Kegelwinkeln gebildet. Auch bei der zu dem Einschraubwerkzeug gehörenden Werkzeugaufnahme wird der zwischen einer vorderen Stirnseite der Werkzeugaufnahme und einem Innengewinde angeordnete Abstützbereich durch zwei konische Auflageflächen mit unterschiedlichen Kegelwinkeln gebildet. Dadurch wird ein Abstützbereich mit einem Doppelkonus geschaffen, der gegenüber einer Plananlage oder einer geraden Anlagefläche eine vergrößerte Auflagefläche und eine verbesserte Zentrier- und Abstützwirkung ermöglicht.

Die an den Werkzeugkopf angrenzende erste konische Anlagefläche des Einschraubwerkzeugs und die dazugehörige konische erste Auflagefläche an der Stirnseite der Werkzeugaufnahme weisen vorzugsweise einen relativ großen Kegelwinkel auf. Hier hat sich ein Kegelwinkel von 170° als günstig herausgestellt. In einer bevorzugten Ausgestaltung schließt sich an diese Fläche am Einschraubwerkzeug die zweite konische Anlagefläche und an der Werkzeugaufnahme die dazugehörige zweite konische Auflagefläche an. Diese zweite Anlagefläche und die dazu korrespondierende zweite Auflagefläche weisen vorzugsweise relativ kleine Kegelwinkel auf. Hier hat sich ein Kegelwinkel von 10° als günstig herausgestellt. Es ist aber auch möglich zwischen den beiden konischen Flächen einen z.B. zylindrischen Zwischenbereich vorzusehen. Ein Doppelkonus der beschriebenen Art mit zwei unterschiedlichen Kegelwinkeln hat den Vorteil, dass der kleine Kegelwinkel eine gute Zentrierung des Einschraubwerkzeugs in der Werkzeugaufnahme und der große Kegelwinkel eine zusätzliche Zentrierung aber mit stark reduzierten Aufspreizkräften an der Werkzeugaufnahme ermöglicht. Zudem wird durch die konische erste Anlagefläche die Steifigkeit des Werkzeugs erhöht, da das Werkzeug bei radialer Belastung nicht abgleiten kann, wie das bei einer planen Anlagefläche der Fall ist.

Dabei sind für die Orientierung der konischen ersten Anlagefläche und der dazugehörigen konischen ersten Auflagefläche zwei Ausführungen möglich. In einer ersten, bevorzugten Ausgestaltung verringern sich die Durchmesser dieser konischen Flächen in Einschraubrichtung des Werkzeugs, dass heißt die Kegel, welche den beiden den Doppelkonus bildenden Kegelflächen zugrunde liegen, zeigen in dieselbe Richtung. In dieser Ausführungsform ist eine leichte Aufspreizung der Werkzeugaufnahme durch die konischen Flächen möglich. Im Vergleich zu einer planen axialen Anlagefläche steigt hierbei die Gewindevorspannung mit dem Einschraubwinkel weniger stark an und es ist somit eine exaktere Einstellung der Vorspannung bei der Montage des Einschraubwerkzeugs möglich. Da die Einschraubwerkzeuge zumeist einteilig aus sehr harten Werkstoffen hergestellt werden, beschränkt sich die für die Gewindearretierung notwendige elastische Verformung des Gewindes zu einem großen Teil auf die Verformung des Innengewindes des Werkzeughalters. Im Hinblick auf eine möglichst lange Lebensdauer eines solchen Werkzeughalters ist eine exakte Einstellung der Gewindevorspannung somit äußerst wichtig. Durch einen Doppelkonus der beschriebenen Art wird eine exakte, weil besser einstellbare Gewindevorspannung ermöglicht. In einer weiteren möglichen Ausgestaltung vergrößern sich die Durchmesser der konischen ersten Anlagefläche und der dazugehörigen konischen ersten Auflagefläche in Einschraubrichtung des Werkzeugs, dass heißt die Kegel, welche den beiden den Doppelkonus bildenden Kegelflächen zugrunde liegen, zeigen in entgegengesetzte Richtungen. Durch eine derartige Ausgestaltung des Doppelkonus wird einer Aufspreizung der Werkzeugaufnahme entgegen gewirkt, da die durch die konischen Flächen bedingten radialen Kräfte entgegen gesetzt wirken. Der besondere Vorteil dieser Ausgestaltung ist, dass durch die reduzierte Aufspreizung der Werkzeugaufnahme ein besserer Rückschluss von dem Einschraub-Drehmoment auf die Gewindevorspannung und damit eine genauere Einstellung der Gewindevorspannung mit den oben beschrieben Vorteilen ermöglicht wird.

In einer weiteren vorteilhaften Weise ist am freien Ende des Werkzeugschafts und entsprechend auch am inneren Ende der Aufnahmeöffnung der Werkzeugaufnahme ein weiterer Abstützbereich mit einem Anlagebereich bzw. mit einem weiteren Auflagebereich vorgesehen. Dieser weitere Anlagebereich am Werkzeugschaft des Einschraubwerkzeugs kann z.B. kugelförmig ausgebildet sein, während der dazugehörige weitere Auflagebereich an der Werkzeugaufnahme als zylindrische Auflagefläche ausgeführt sein kann. Durch den kugelförmigen Anlagebereich und die zylindrische Auflagefläche wird in diesen Bereich eine nur partielle Berührung zwischen dem Einschraubwerkzeug und der Werkzeugaufnahme erreicht. Zweckmäßigerweise weist der kugelförmige weitere Anlagebereich ein Übermaß gegenüber der zylindrischen Auflagefläche auf, so dass die Vorspannung in diesem weiteren Abstützbereich unabhängig von der Einschraubtiefe ist. Es sind aber auch andere Ausgestaltungen des weiteren Abstützbereichs denkbar. So können an dem Werkzeug und der Werkzeugaufnahme auch in beliebiger Kombination kugelförmige, konische oder zylindrische Anlageflächen bzw. Auflageflächen vorgesehen sein.

Das Außengewinde am Einschraubwerkzeug und das entsprechende Innengewinde an der Werkzeugaufnahme weisen zweckmäßigerweise eine zum freien Ende des Werkzeugschafts hin bzw. zum inneren Ende der Aufnahmeöffnung hin abnehmende Gewindetiefe auf. Die Gewinde können aber auch eine konstante Gewindetiefe aufweisen.

Für das Außengewinde und das entsprechende Innengewinde haben sich Trapezgewinde oder Flachgewinde als besonders zweckmäßig erwiesen. Die Gewinde können aber auch als Spitzgewinde, Rundgewinde, Sägezahngewinde oder dgl. ausgebildet sein.

In einer weiteren vorteilhaften Ausgestaltung ist eine Einsatzbuchse vorgesehen, welche in den Werkzeughalter eingesetzt wird. Diese Einsatzbuchse kann die Auflageflächen des ersten und zweiten Abstützbereichs sowie das Gewinde, aber auch nur einen Teil dieser Elemente beinhalten. Durch die Wahl eines geeigneten Materials für die Einsatzbuchse kann eine Schwingungsdämpfung erreicht werden. Ferner kann damit auch der Werkzeughalter aus festem, aber sprödem Hartmetall und die Einsatzbuchse mit dem Gewinde aus weicherem, dafür aber eher elastischem Stahl hergestellt werden, was für eine sichere Arretierung der Schraubverbindung günstig ist. Zudem kann der Werkzeughalter durch verschiedene Einsatzbuchsen für die Aufnahme von unterschiedlichen Geometrien von Werkzeugen angepasst werden. Die Einsatzbuchse kann aus einem Teil oder aus mehreren Teilen bestehen, die auch aus unterschiedlichen Materialien bestehen können.

Um die Herstellung des Einschraubwerkzeugs zu vereinfachen, kann am Werkzeugschaft eine Greiferrille zum Einspannen des Einschraubwerkzeugs vorgesehen sein. In die Greiferrille können z.B. zangenförmige Greiferelemente einer Spannvorrichtung zum Spannen des Werkzeugs in der Werkzeugaufnahme eingreifen. Beim Spannen mit Hilfe der Greiferrille können Werkzeug und Werkzeughalter mit einer Verdrehsicherung versehen sein.

Die Werkzeugaufnahme kann beispielsweise aus Stahl, Hartmetall, Aluminium oder einem Faserverbundwerkstoff, insbesondere mit Glas- oder Kohlefaser, bestehen.

Weitere Besonderheiten und Vorzüge der Erfindung ergeben sich aus der folgenden Beschreibung bevorzugter Ausführungsbeispiele anhand der Zeichnungen. Es zeigen:
- **Figur 1**: eine Werkzeugaufnahme und ein Einschraubwerkzeug in einem Längsschnitt;
- **Figur 2**: die Werkzeugaufnahme und das Einschraubwerkzeug von Figur 1 in einer Perspektivansicht;
- **Figur 3**: eine Detailansicht X von Figur 1;
- **Figur 4**: eine Detailansicht Y von Figur 1;
- **Figur 5**: eine Detailansicht Z von Figur 1;
- **Figur 6**: ein Einschraubwerkzeug mit einem Trapezgewinde;
- **Figur 7**: eine Werkzeugaufnahme für ein Einschraubwerkzeug nach Figur 6;
- **Figur 8**: ein Einschraubwerkzeug mit einem Flachgewinde;
- **Figur 9**: eine Werkzeugaufnahme für ein Einschraubwerkzeug nach Figur 8;
- **Figur 10**: ein weiteres Ausführungsbeispiel eines Einschraubwerkzeugs mit einem Trapezgewinde;
- **Figur 11**: eine vergrößerte Teilansicht Y von Figur 10;
- **Figur 12**: ein weiteres Ausführungsbeispiel einer Werkzeugaufnahme und eines Einschraubwerkzeugs in einem Längsschnitt und
- **Figur 13**: eine vergrößerte Teilansicht Y von Figur 12.

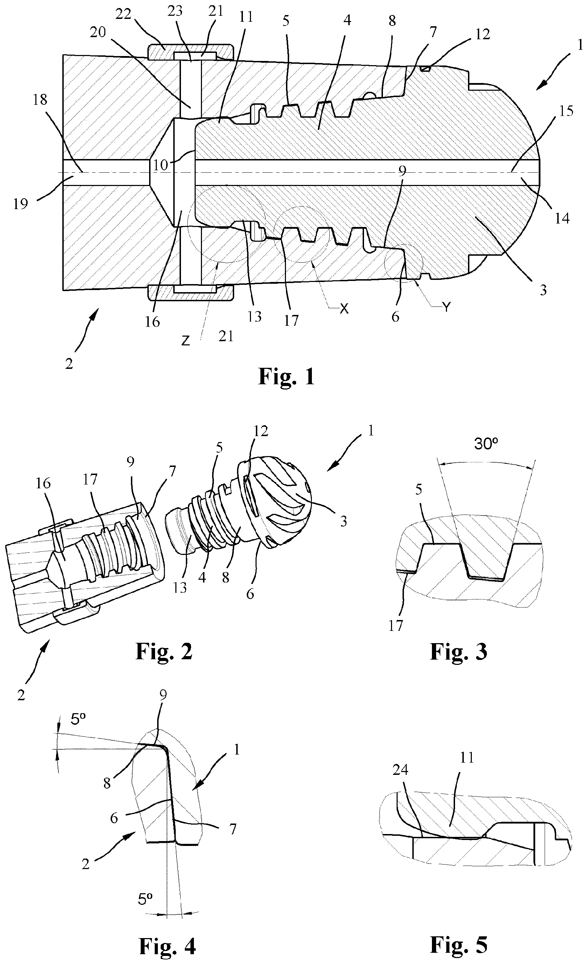

In den Figuren 1 und 2 ist eine Werkzeuganordnung mit einem Einschraubwerkzeug 1 und einer zugehörigen Werkzeugaufnahme 2 in einem Längsschnitt und einer Perspektivansicht gezeigt. Das Einschraubwerkzeug 1 weist einen hier als Kugelkopffräser ausgebildeten Werkzeugkopf 3 und einen sich konisch nach hinten verjüngenden Werkzeugschaft 4 mit einem Außengewinde 5 auf. Zwischen dem Werkzeugkopf 3 und dem Außengewinde 5 ist ein erster Abstützbereich mit einer ersten konischen Anlagefläche 6 zur Anlage an einer gegenkonischen Auflagefläche 7 an einer vorderen Stirnseite der Werkzeugaufnahme 2 und eine zweite konische Anlagefläche 8 zur Anlage an einer zweiten konischen Auflagefläche 9 im Inneren der Werkzeugaufnahme vorgesehen. Dadurch ergibt sich an dem Übergang zwischen dem Werkzeugkopf 3 und dem Außengewinde 5 ein Doppelkonus, der für eine verbesserte Zentrierung und erhöhte Abstützwirkung sorgt. An einem freien hinteren Ende 10 des Werkzeugschafts 4 befindet sich ein zweiter Abstützbereich 11.

Wie besonders aus Figur 2 hervorgeht, weist der Werkzeugkopf 3 an seiner Außenseite mehrere über den Umfang verteilte Schlüsselflächen 12 zum Einschrauben des Einschraubwerkzeug 1 in die Werkzeugaufnahme 2 auf. Die Schlüsselflächen 12 können auch zum automatischen Werkzeugwechsel in der Fräsmaschine verwendet werden. Zwischen dem hinteren Ende des Außengewindes 5 und dem hinteren zweiten Abstützbereich 11 ist im hinteren Bereich des Werkzeugschafts 4 außerdem eine Greiferrille 13 zum automatischen Spannen des Einschraubwerkzeugs 1 in der Werkzeugaufnahme 2 vorgesehen. In die Greiferrille 13 können z.B. zangenförmige Greiferelemente einer Spannvorrichtung eingreifen, um das Einschraubwerkzeug 1 in der Werkzeugaufnahme 2 sicher greifen bzw. halten zu können. Durch das Einschraubwerkzeug 1 verläuft ferner eine in Figur 1 erkennbare zentrale Durchgangsöffnung 14, über die Kühlschmiermittel, Druckluft oder ein anderes Arbeitsfluid zum Bearbeitungsbereich geleitet werden kann. Die Durchgangsöffnung 14 ist koaxial zur Mittelachse 15 des Einschraubwerkzeugs 1 angeordnet, es sind aber auch andere Anordnungen, z.B. mit echt parallelen oder angewinkelten Längsachsen möglich.

Die zu dem Einschraubwerkzeug 1 gehörende Werkzeugaufnahme 2 weist eine Aufnahmeöffnung 16 mit einem Innengewinde 17 auf. An der vorderen Stirnseite des Werkzeughalters 2 ist ein äußerer Abstützbereich mit der ersten Auflagefläche 7 zur Anlage an der ersten Anlagefläche 6 und mit der zweiten Auflagefläche 9 zur Anlage an der zweiten Anlagefläche 8 des Einschraubwerkzeugs 1 vorgesehen. Auch in der Werkzeugaufnahme 2 ist eine zu deren Mittelachse 18 koaxiale Zufuhröffnung 19 für die Zuführung eines Arbeitsfluids zur Durchgangsöffnung 14 des Einschraubwerkzeugs 1 angeordnet, wobei auch hier eine andere Anordnung vergleichbar der Durchgangsöffnung 14 möglich ist. In der Werkzeugaufnahme 2 können auch radiale Bohrungen 20 angeordnet sein, die in die Aufnahmeöffnung 16 oder auch in die Zuführung 19 münden. An der Außenseite der Werkzeugaufnahme 2 kann eine mit einer Ringnut 21 an der Innenseite versehene Hülse 22 für eine äußere Kühlmittelzuführung angeordnet sein. Die Ringnut 21 kann ebenso aber auch an der Werkzeugaufnahme 2 angeformt sein.

Bei der in den Figuren 1 bis 7 dargestellten Ausführung sind das Außengewinde 5 des Einschraubwerkzeugs 1 und das dazu gehörige Innengewinde 17 der Werkzeugaufnahme 2 als Trapezgewinde mit einem in Figur 3 dargestellten Flankenwinkel von 30° ausgeführt. Das Außengewinde 5 des Einschraubwerkzeugs 1 und das dazu gehörige Innengewinde 17 der Werkzeugaufnahme 2 können aber auch als Trapezgewinde mit anderen Flankenwinkeln ausgeführt sein. Im Gegensatz zu den herkömmlichen Gewinden, bei denen die Gewindegänge eine gleich bleibende Gewindetiefe aufweisen, weist das hier verwendete Außengewinde 5 eine vom Werkzeugkopf 3 zum freien hinteren Ende 10 des Werkzeugschafts 4 hin abnehmende Gewindetiefe auf. Auch bei dem Innengewinde 17 der Werkzeugaufnahme 2 nimmt die Gewindetiefe von der zweiten Auflagefläche 9 bis zum zweiten Abstützbereich 11 hin ab.

Aus Figur 4 ist ersichtlich, dass die erste Anlagefläche 6 des Einschraubwerkzeugs 1 und die entsprechende erste Auflagefläche 7 der Werkzeugaufnahme 2 um jeweils 5° bezüglich einer zu den Mittelachsen 15 bzw. 18 senkrechten Ebene in Richtung des vorderen Endes des Werkzeugkopfs 3 geneigt sind. Dadurch weisen die erste konische Anlagefläche 6 und auch die erste konische Auflagefläche 7 einen Kegelwinkel von mindestens 140° und maximal 179°, aber bevorzugt 170° auf. Der Durchmesser der zweiten konischen Anlagefläche 8 des Einschraubwerkzeugs 1 und der Durchmesser der zweiten konischen Auflagefläche 9 der Werkzeugaufnahme 2 verjüngen sich in Einschraubrichtung, so dass sich ein Kegelwinkel von mindestens 1° und maximal 90°, aber bevorzugt 10° ergibt, was einen Winkel der Kegelflächen von 5° gegenüber den Mittelachsen 15 bzw. 18 bedeutet.

Der zweite Abstützbereich 11 des Einschraubwerkzeugs 1 ist gemäß Figur 5 kugelförmig ausgebildet und gelangt zur Anlage an einer zylindrischen Anlagefläche 24 am Ende der Aufnahmeöffnung 16. Durch die zylindrische Anlagefläche 24 wird in der Werkzeugaufnahme ein weiterer innerer Anlagebereich gebildet. Der kugelförmige Abstützbereich 11 sorgt für eine nur partielle Berührung zwischen dem Einschraubwerkzeug 1 und der Werkzeugaufnahme 2. Zweckmäßigerweise weist der kugelförmige zweite Abstützbereich 11 ein Übermaß gegenüber der zylindrischen Anlagefläche 24 auf, so dass die Vorspannung in diesem zweiten Abstützbereich unabhängig von der Einschraubtiefe ist.

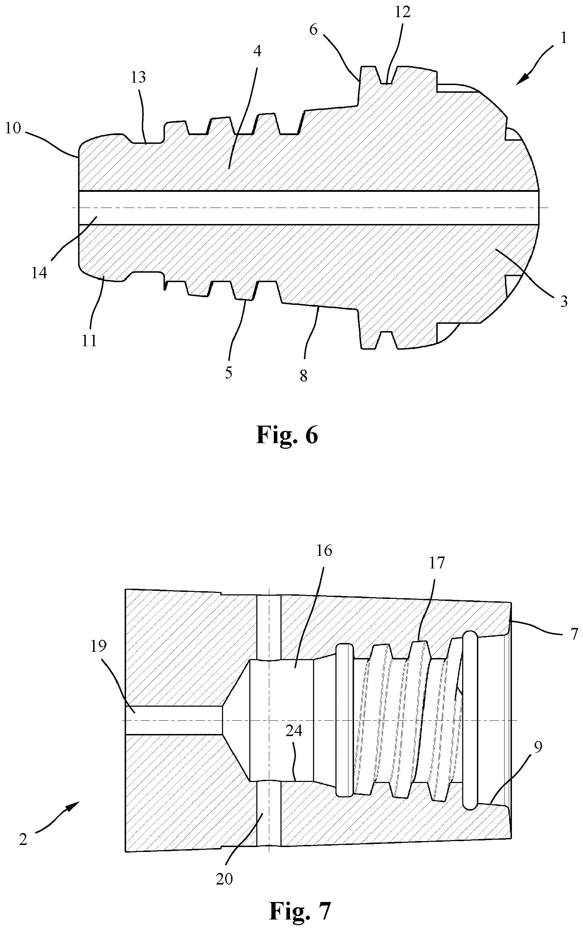

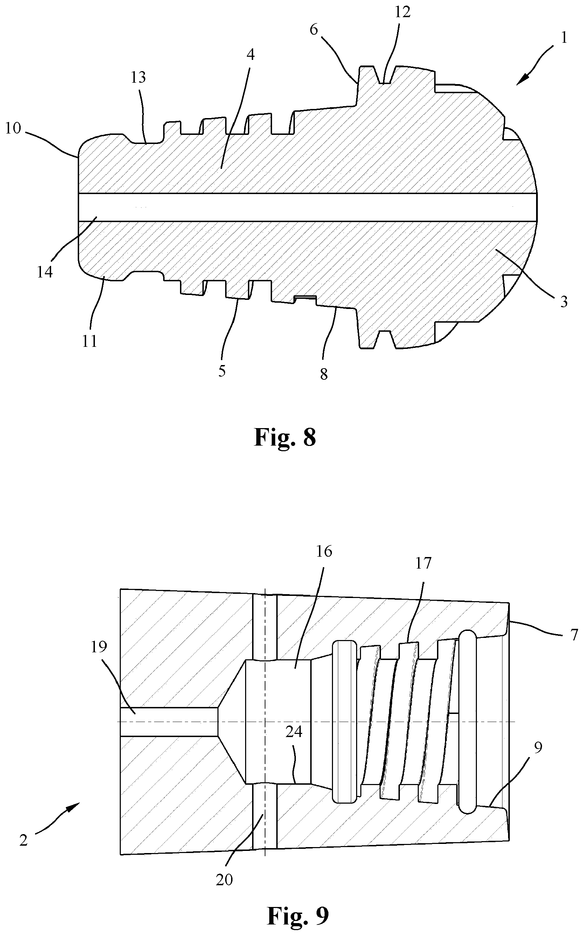

In den Figuren 8 und 9 ist ein weiteres Ausführungsbeispiel eines Einschraubwerkzeugs 1 und einer zugehörigen Werkzeugaufnahme 2 gezeigt. Im Gegensatz zur der Ausführung der Figuren 6 und 7 sind bei diesem Ausführungsbeispiel das Außengewinde 5 des Einschraubwerkzeugs 1 und das Innengewinde 17 der Werkzeugaufnahme 2 als Flachgewinde ausgeführt. Ansonsten entspricht diese Ausführung dem vorherigen Ausführungsbeispiel, so dass einander entsprechende Bauteile auch mit denselben Bezugszeichen versehen sind. Auch bei dieser Ausführung weist das hier verwendete Außengewinde 5 eine vom Werkzeugkopf 3 zum freien hinteren Ende 10 des Werkzeugschafts 4 hin abnehmende Gewindetiefe auf. Ferner nimmt auch hier beim Innengewinde 17 der Werkzeugaufnahme 2 die Gewindetiefe von der zweiten Auflagefläche 9 bis zum zweiten Abstützbereich 11 hin ab.

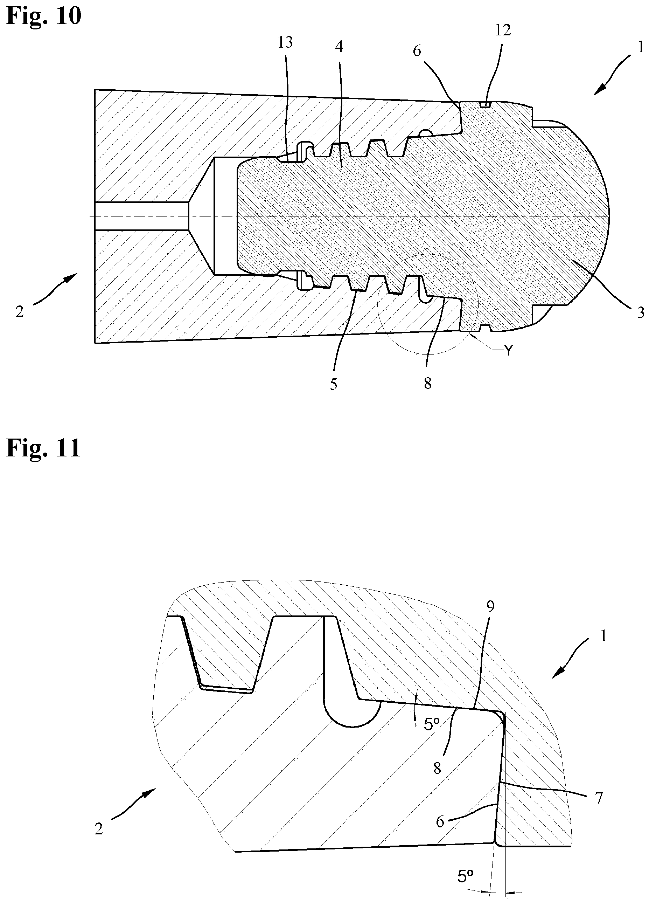

In den Figuren 10 und 11 ist ein Ausführungsbeispiel gezeigt, bei dem sich die Durchmesser der konischen ersten Anlagefläche 6 des Einschraubwerkzeugs 1 und der dazugehörigen konischen ersten Auflagefläche 7 der Werkzeugaufnahme 2 in Einschraubrichtung des Einschraubwerkzeugs 1 erweitern. Die erste Anlagefläche 6 und die entsprechende erste Auflagefläche 7 sind um jeweils 5° bezüglich einer zu den Mittelachsen 15 bzw. 18 senkrechten Ebene in Richtung des Werkzeugschafts 4 geneigt. Dadurch weist die erste konische Anlagefläche 6 und auch die erste konische Auflagefläche 7 genau wie in dem Ausführungsbeispiel aus Fig. 4 einen Kegelwinkel von 170° auf. Die zweite konische Anlagefläche 8 und die zweite konische Auflagefläche 9 verjüngen sich mit einem Winkel von 5° gegenüber den Mittelachsen 15 und 18, so dass sich ein Kegelwinkel von 10° ergibt. Im Unterschied zu den Ausführungen der Figuren 1 bis 9 zeigen die Kegel, welche den beiden den Doppelkonus bildenden Kegelflächen zugrunde liegen, in entgegen gesetzte Richtungen.

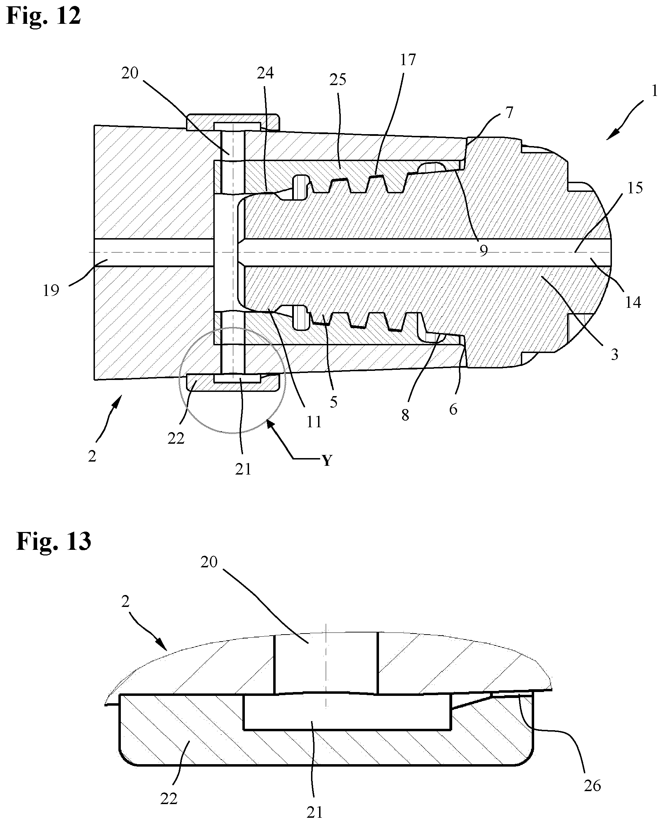

In der Figur 12 ist ein Ausführungsbeispiel gezeigt, bei dem eine Einsatzbuchse 25, welche die zweite konische Auflagefläche 9, das Innengewinde 17 und die zylindrische Anlagefläche 24 enthält, in die Aufnahmeöffnung 16 der Werkzeugaufnahme 2 eingesetzt ist. Die radialen Bohrungen 20 gehen durch die Werkzeugaufnahme 2 und die Einsatzbuchse 25 und münden in der Aufnahmeöffnung 16 der Werkzeugaufnahme 2.

Figur 13 zeigt eine vergrößerte Darstellung der Hülse 22 für die äußere Kühlmittelzuführung. In Richtung des Werkzeugs weist die Hülse 22 einen oder mehrere Auslässe 26 auf, durch die das über die radialen Bohrungen 20 nach außen geführte und durch die äußeren Öffnungen 23 austretende Kühlmittel an das Werkzeug bzw. die zu bearbeitende Stelle geleitet werden kann. Der oder die Auslässe 26 können als umlaufender Spalt, Bohrungen Schlitze oder dgl. ausgebildet sein.

Die Erfindung ist nicht auf die vorstehend beschriebenen und in der Zeichnung dargestellten Ausführungsbeispiele beschränkt. So können z.B. die äußere Kühlmittelzuführung mit den Radialbohrungen und der Hülse, die Greiferrille für die automatische Spannung in einer Werkzeugmaschine, die Einsatzbuchse oder auch die Ausführung der Werkzeugaufnahme aus Faserverbundwerkstoffen bei Einschraubwerkzeugen oder Werkzeugaufnahmen einzeln oder in Kombination zum Einsatz gelangen, bei denen nur einfache konische, zylindrische oder plane Anlage- bzw. Auflageflächen oder andere Zentrier- oder Führungsmöglichkeiten Verwendung finden. Diese Ausführungen sind nicht auf Einschraubwerkzeuge oder Aufnahmen mit Doppelkonus beschränkt.

## Patentansprüche

1. Einschraubwerkzeug (1), das einen Werkzeugkopf (3) und einen Werkzeugschaft (4) mit einem Außengewinde (5) und einem zwischen dem Werkzeugkopf (3) und dem Außengewinde (5) angeordneten Abstützbereich enthält, **dadurch gekennzeichnet, dass** der Abstützbereich durch zwei konische Anlageflächen (6, 8) mit unterschiedlichen Kegelwinkeln gebildet wird.

2. Einschraubwerkzeug nach Anspruch 1, **dadurch gekennzeichnet, dass** die beiden konischen Anlageflächen (6, 8) unmittelbar aneinander angrenzen.

3. Einschraubwerkzeug nach Anspruch 1 oder 2, **dadurch gekennzeichnet, dass** der Abstützbereich durch eine an den Werkzeugkopf (3) angrenzende erste konische Anlagefläche (6) mit einem Kegelwinkel von 140° bis 179° und eine zweite konische Anlagefläche (8) mit einem Kegelwinkel von 1° bis 90° gebildet wird.

4. Einschraubwerkzeug nach Anspruch 3, **dadurch gekennzeichnet, dass** die erste konische Anlagefläche (6) einen Kegelwinkel von 170° und die zweite konische Anlagefläche einen Kegelwinkel von 10° aufweist.

5. Einschraubwerkzeug nach einem der Ansprüche 1 bis 4, **dadurch gekennzeichnet, dass** sich der Durchmesser der ersten konischen Anlagefläche (6) in Einschraubrichtung des Einschraubwerkzeugs vergrößert oder bevorzugt verringert.

6. Einschraubwerkzeug nach einem der Ansprüche 1 bis 5, **dadurch gekennzeichnet, dass** am Werkzeugschaft (4) ein weiterer Abstützbereich (11) vorgesehen ist.

7. Einschraubwerkzeug nach Anspruch 6, **dadurch gekennzeichnet, dass** der weitere Abstützbereich (11) kugelförmig, zylindrisch oder konisch ausgebildet ist.

8. Einschraubwerkzeug nach einem der Ansprüche 1 bis 7, **dadurch gekennzeichnet, dass** das Außengewinde (5) eine zum freien Ende (10) des Werkzeugschafts (4) hin abnehmende Gewindetiefe enthält.

9. Einschraubwerkzeug nach einem der Ansprüche 1 bis 8, **dadurch gekennzeichnet, dass** das Außengewinde (5) als Trapez-, Rund-, Flach- oder Spitzgewinde ausgebildet ist.

10. Einschraubwerkzeug nach einem der Ansprüche 1 bis 9, **dadurch gekennzeichnet, dass** am Werkzeugschaft (4) eine Greiferrille (13) zum Einspannen des Einschraubwerkzeugs (1) vorgesehen ist.

11. Werkzeugaufnahme (2) für ein Einschraubwerkzeug (1), die eine Aufnahmeöffnung (16) mit einem Innengewinde (17) und einen zwischen einer vorderen Stirnseite der Werkzeugaufnahme (2) und dem Innengewinde (17) angeordneten Abstützbereich enthält, **dadurch gekennzeichnet, dass** der Abstützbereich durch zwei konische Auflageflächen (7, 9) mit unterschiedlichen Kegelwinkeln gebildet wird.

12. Werkzeugaufnahme nach Anspruch 11, **dadurch gekennzeichnet, dass** die beiden konischen Auflageflächen (7, 9) unmittelbar aneinander angrenzen.

13. Werkzeugaufnahme nach Anspruch 11 oder 12, **dadurch gekennzeichnet, dass** der Abstützbereich durch eine an der vorderen Stirnseite der Werkzeugaufnahme (2) angrenzende erste konische Auflagefläche (7) mit einem Kegelwinkel von 140° bis 179° und eine zweite konische Auflagefläche (9) mit einem Kegelwinkel von 1° bis 90° gebildet wird.

14. Werkzeugaufnahme nach Anspruch 13, **dadurch gekennzeichnet, dass** die erste konische Auflagefläche (7) einen Kegelwinkel von 170° und die zweite konische Auflagefläche (9) einen Kegelwinkel von 10° aufweist.

15. Werkzeugaufnahme nach einem der Ansprüche 11 bis 14, **dadurch gekennzeichnet, dass** sich der Durchmesser der ersten konischen Auflagefläche (7) in Einschraubrichtung des Einschraubwerkzeugs (1) vergrößert oder bevorzugt verringert.

16. Werkzeugaufnahme nach einem der Ansprüche 11 bis 15, **dadurch gekennzeichnet, dass** an einem inneren Ende der Aufnahmeöffnung (16) ein innerer Anlagebereich vorgesehen ist.

17. Werkzeugaufnahme nach Anspruch 16, **dadurch gekennzeichnet, dass** der innere Anlagebereich als zylindrische, kugelförmige oder konische Anlagefläche (24) ausgebildet ist.

18. Werkzeugaufnahme nach einem der Ansprüche 11 bis 17, **dadurch gekennzeichnet, dass** das Innengewinde (17) eine zu dem inneren Ende der Aufnahmeöffnung (16) hin abnehmende Gewindetiefe enthält.

19. Werkzeugaufnahme nach einem der Ansprüche 11 bis 18, **dadurch gekennzeichnet, dass** das Innengewinde (17) als Trapez-, Rund-, Flach- oder Spitzgewinde ausgebildet ist.

20. Werkzeugaufnahme nach einem der Ansprüche 11 bis 19, **dadurch gekennzeichnet, dass** sie eine Einsatzbuchse (25) zur Aufnahme des Einschraubwerkzeugs (1) enthält.

21. Werkzeugaufnahme nach einem der Ansprüche 11 bis 20, **dadurch gekennzeichnet, dass** an ihrer Außenseite eine Hülse (22) zur Umlenkung einer über radiale Bohrungen (20) nach außen geführten Kühlflüssigkeit über mindestens eine Öffnung (26) in Richtung des Einschraubwerkzeugs (1) angeordnet ist.

22. Werkzeuganordnung mit einem Einschraubwerkzeug (1) und einer Werkzeugaufnahme (2), **dadurch gekennzeichnet, dass** das Einschraubwerkzeug (1) nach einem der Ansprüche 1 bis 10 und die Werkzeugaufnahme (2) nach einem der Ansprüche 11 bis 21 ausgebildet ist.

23. Werkzeuganordnung nach Anspruch 22, **dadurch gekennzeichnet, dass** der zweite Abstützbereich (11) des Einschraubwerkzeugs (1) ein Übermaß gegenüber der Anlagefläche (24) der Werkzeugaufnahme (2) aufweist und es somit bei der Montage von Einschraubwerkzeug (1) und Werkzeugaufnahme (2) zu einer Pressung zwischen Einschraubwerkzeug (1) und Werkzeugaufnahme (2) kommt.
